# EUROPEAN PATENT APPLICATION

(11) **EP 2 757 855 A1**
(43) Date of publication of application: **23.07.2014**
(21) Application number: 13305049.2
(22) Date of filing: 17.01.2013
(51) Int. Cl.: H04W 76/02, H04W 28/08

(54) **Traffic Offload**

(71) Applicant: Alcatel Lucent, 75007 Paris (FR)
(72) Inventor: Worrall, Chandrika, Swindon, Wiltshire SN5 7DJ (GB)
(74) Representative: Leppard, Andrew John

(57) **Abstract**

A wireless telecommunications method, network nodes and computer program products are disclosed. The method comprises: receiving an indication of radio bearer allocation onto different transmission paths supporting simultaneous communication between user equipment and different base stations; and mapping, in accordance with the indication, at least one radio bearer for transmission using only a first transmission path supporting communication between the user equipment and a first base station and at least one other radio bearer for transmission using only a second transmission path supporting communication between the user equipment and a second base station. In this way, traffic can be offloaded from one base station and transmitted only to another base station. Differentiation based on the delivery node or the transmission path can therefore be achieved since the radio bearers are mapped onto these different transmission paths. This enables just the required radio bearers to be offloaded to the intended base station, whilst ensuring that other radio bearers are not.

## Description

### FIELD OF THE INVENTION

The present invention relates to a wireless telecommunications method, network nodes and computer program products.

### BACKGROUND

In a cellular wireless telecommunications network, radio coverage is provided by areas known as cells. A base station is located in each cell to provide the radio coverage area or cell. Traditional base stations provide coverage in relatively large geographical areas and these are often referred to as macro cells. It is possible to provide smaller sized cells, often within a macro cell. Such smaller sized cells are sometimes referred to as micro cells, pico cells or femto cells. Such small cells are typically established by providing a small cell base station that provides radio coverage having a relatively limited range, typically within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small cell network.

Such small cells have generally been provided where the communication coverage provided by the macro cell is poor, or where a user wishes to use an alternative communications link provided locally by the small cell base station, to communicate with the core network. Such a situation might arise where, for example, a user has a pre-existing communications link and the user wishes to utilise that link in preference to that provided by the macro cell network provider to communicate with the core network. However, increasingly, small cells are being deployed in areas of high traffic demand (often referred to as hot spots), where that demand risks overloading the macro cell. Users can then be handed over to the small cell in order to reduce the traffic load on the macro cell.

Although providing such small cells can provide many advantages, unexpected consequences can also occur.

Accordingly, it is desired to provide an improved technique for controlling the interaction between user equipment and base stations.

### SUMMARY

According to a first aspect, there is provided a wireless telecommunications method, comprising: receiving an indication of radio bearer allocation onto different transmission paths supporting simultaneous communication between user equipment and different base stations; and mapping, in accordance with the indication, at least one radio bearer for transmission using only a first transmission path supporting communication between the user equipment and a first base station and at least one other radio bearer for transmission using only a second transmission path supporting communication between the user equipment and a second base station.

The first aspect recognises that a problem with offloading traffic to another base station is that there is currently no way for user equipment to differentiate traffic based on the delivery node or transmission path. Even in carrier aggregation or multiple input multiple output (MIMO) deployments or coordinated multipoint transmission (CoMP), which involve the transmission of data over multiple paths, the user equipment assumes that all connections or transmission paths are equivalent in terms of the offered quality of service and, hence, traffic differentiation or transmission path differentiation is not considered. Accordingly, user equipment would instead typically be handed over to the small cell in order to offload traffic, which introduces a large configuration overhead and causes problems since control plane traffic, network connectivity and mobility associated traffic is diverted away from the currently supporting base station to the other base station, which causes a number of difficulties.

Accordingly, a method is provided. The method may comprise the step of receiving an indication. The indication may indicate the allocation of radio bearers onto different transmission paths. Each of those transmission paths may support simultaneous or concurrent communication of traffic between the user equipment and a number of different base stations. That is to say, each transmission path may be a separate communication path between the user equipment and a separate base station. The method may also comprise mapping a radio bearer onto just the first transmission path and another radio bearer onto just the second transmission path in response to the received indication. The first transmission path may exist between the user equipment and the first base station, whilst the second transmission path may exist between the user equipment and the second base station. In this way, it can be seen that traffic can be offloaded from one base station and transmitted only to another base station. In other words, differentiation based on the delivery node or the transmission path can therefore be achieved since the radio bearers are mapped onto these different transmission paths. This enables just the required radio bearers to be offloaded to the intended base station, whilst ensuring that other radio bearers are not.

In one embodiment, the first transmission path is supported by a first protocol stack and the second transmission path is supported by a second protocol stack and the step of mapping comprises mapping the at least one radio bearer to the first protocol stack and the at least one other radio bearer to the second protocol stack. Accordingly, two protocol stacks may be provided, each of which maps to a different transmission path and radio bearers for one transmission path are provided to the protocol stack for that transmission path, whilst the radio bearers for the other transmission path are provided to the protocol stack for that transmission path.

In one embodiment, the indication indicates allocation of a plurality of logical channels derived from a plurality of the radio bearers, the first transmission path is coordinated by a first scheduler and the second transmission path is coordinated by a second scheduler and the step of mapping comprises mapping at least one logical channel derived from the at least one radio bearer to the first scheduler and at least one other logical channel derived from the at least one other radio bearer to the second scheduler. Accordingly, it is possible to indicate those logical channels to be mapped from one traffic channel to another and to map those logical channels so that they are provided to the scheduler associated with the transmission path over which traffic provided over that logical channel is to be transmitted.

In one embodiment, the first transmission path and the transmission path comprise one of an uplink traffic channel and a downlink traffic channel.

In one embodiment, the first transmission path and the second transmission path comprise an uplink traffic channel and the first scheduler and the second scheduler are provided by the user equipment.

In one embodiment, the first transmission path and the second transmission path comprise a downlink traffic channel and the first scheduler and the second scheduler are provided by the first base station and the second base station respectively.

In one embodiment, first base station and the second base station are co-located.

In one embodiment, upper layers of the first protocol stack and the second protocol stack are shared by both the first protocol stack and the second protocol stack. Accordingly, at least some layers (for example, the PDCP and/or RLC layers) of the protocol stacks maybe shared, with the differentiation occurring at lower levels (for example, the MAC and/or PHY layer) of the protocol stacks.

In one embodiment, the user equipment is served primarily by the first base station, the indication indicates allocation of a plurality of radio bearers from the first transmission path to the second transmission path and the step of mapping comprises mapping the plurality of radio bearers to the second transmission path. Accordingly, traffic provided by a plurality of radio bearers may be offloaded from the first base station to the second base station.

In one embodiment, the indication indicates allocation of a plurality of logical channels derived from a plurality of the radio bearers from the first transmission path to the second transmission path and the step of mapping comprises mapping the plurality of logical channels to the second transmission path. Accordingly, the indication may indicate that a plurality of logical channels is to be offloaded to the second base station.

In one embodiment, the indication indicates allocation of at least one logical channel group to the second transmission path. Accordingly, a single indication may indicate that a plurality of channels is to be offloaded to the second base station. It will be appreciated that this reduces the signalling overhead compared to that of indicating that channel should be offloaded.

In one embodiment, the first base station comprises a macro base station and the second base station comprises a small cell base station. Accordingly, traffic may be offloaded from the macro base station to the small cell base station.

In one embodiment, the radio bearers comprise data radio bearers and signalling radio bearers and the at least one radio bearer comprises only data radio bearers. Accordingly, only data radio bearers may be offloaded, with the signalling radio bearers continuing to be transmitted over the first transmission path. As mentioned above, this ensures that control plane traffic continues to be received by the first base station.

In one embodiment, the method comprises the step of communicating the indication of radio bearer allocation between the first base station and the second base station, Accordingly, information is transmitted between the two base stations to ensure that they are aware of which radio bearers are being transmitted over the transmission paths to them. In one embodiment, radio bearers which are transmitted over the small cell are configured by the small cell base station and communicated to the user equipment via macro cell. In another embodiment, radio bearers which are transmitted over the small cell are configured by the macro base station and communicated to the small cell base stations. Radio bearer configuration generally takes into account the quality of service (QOS) requirement of the evolved packet system (EPS) bearer. Depending on where the EPS bearer terminates (either at the macro cell or the small cell), radio bearer configuration will be performed by the corresponding node

According to a second aspect, there is provided a computer program product operable, when executed on a computer, to perform the method steps of the first aspect.

According to a second aspect, there is provided a network node, comprising: reception logic operable to receive an indication of radio bearer allocation onto different transmission paths supporting simultaneous communication between user equipment and different base stations; and mapping logic operable to map, in accordance with the indication, at least one radio bearer for transmission using only a first transmission path supporting communication between the user equipment and a first base station and at least one other radio bearer for transmission using only a second transmission path supporting communication between the user equipment and a second base station.

In one embodiment, the network node comprises a first protocol stack operable to support the first transmission path and a second protocol stack operable to support the second transmission path and the mapping logic is operable to map the at least one radio bearer to the first protocol stack and the at least one other radio bearer to the second protocol stack.

In one embodiment, the network node comprises a first scheduler operable to coordinate the first transmission path and a second scheduler operable to coordinate the second transmission path and wherein the indication indicates allocation of a plurality of logical channels derived from a plurality of the radio bearers and the mapping logic is operable to map at least one logical channel derived from the at least one radio bearer to the first scheduler and at least one other logical channel derived from the at least one other radio bearer to the second scheduler.

In one embodiment, the first transmission path and the transmission path comprise one of an uplink traffic channel and a downlink traffic channel.

In one embodiment, the network node comprises user equipment and the first transmission path and the second transmission path comprise an uplink traffic channel.

In one embodiment, the first transmission path and the second transmission path comprise a downlink traffic channel and the first scheduler and the second scheduler are provided by the first base station and the second base station respectively.

In one embodiment, the first base station and the second base station are co-located.

In one embodiment, upper layers of the first protocol stack and the second protocol stack are shared by both the first protocol stack and the second protocol stack.

In one embodiment, the user equipment is served primarily by the first base station, the indication indicates allocation of a plurality of radio bearers from the first transmission path to the second transmission path and the mapping logic is operable to map the plurality of radio bearers to the second transmission path.

In one embodiment, the indication indicates allocation of a plurality of logical channels derived from a plurality of the radio bearers from the first transmission path to the second transmission path and the mapping logic is operable to map the plurality of logical channels to the second transmission path.

In one embodiment, the indication indicates allocation of at least one logical channel group to the second transmission path.

In one embodiment, the first base station comprises a macro base station and the second base station comprises a small cell base station.

In one embodiment, the radio bearers comprise data radio bearers and signalling radio bearers and the at least one radio bearer comprises only data radio bearers.

In one embodiment, the network node comprises communicating logic operable to communicate the indication of radio bearer allocation between the first base station and the second base station.

In one embodiment, the network node comprises a base station comprising generation logic operable to generate said indication of radio bearer allocation onto different transmission paths supporting simultaneous communication between user equipment and different base stations. Accordingly, the base station may make the decision to perform the data offloading.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### DESCRIPTION OF THE DRAWINGS

Embodiments of the present invention will now be described further, with reference to the accompanying drawings, in which:
Figure 1 illustrates an example arrangement with the control plane and the user plane being split for a particular user equipment;
Figure 2 illustrates the protocol layer architecture used for uplink to transmission;
Figure 3 illustrates the network signalling employed between network nodes in the wireless telecommunications network when performing traffic offloading;
Figure 4 illustrates an arrangement where control plane traffic is delivered to the serving macro base station while some user plane traffic is delivered to the neighbouring phantom base station; and
Figure 5 illustrates an arrangement where control plane traffic is delivered to the serving macro base station while all user plane traffic is delivered to the neighbouring phantom base station.

### DESCRIPTION OF THE EMBODIMENTS

### Overview

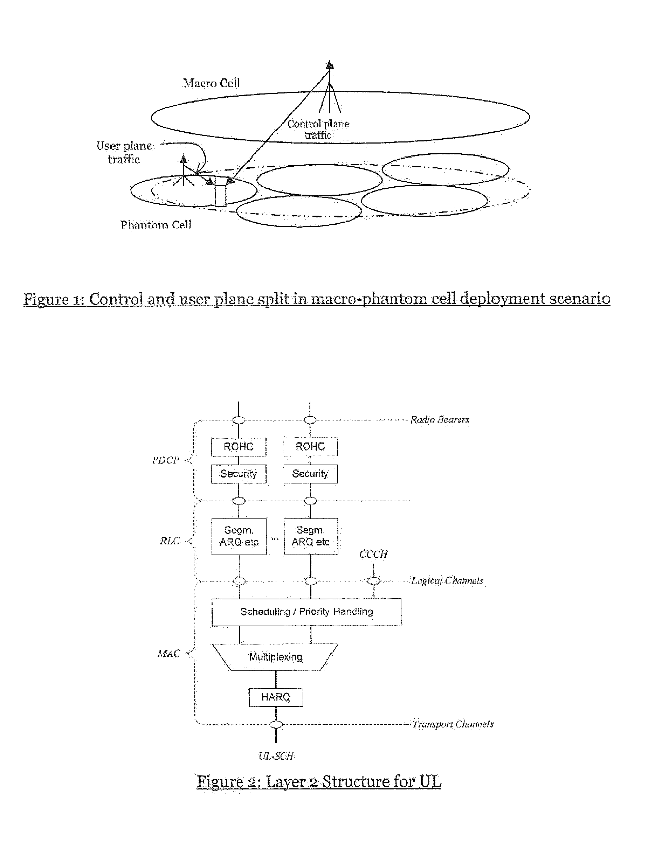

Before discussing the embodiments in any more detail, first an overview will be provided. As mentioned above, small cells are increasingly being deployed to assist in handling capacity needs in high traffic areas of macro cells, such as so-called "hotspot" areas. Traffic offloading in high capacity areas via such small cells is a useful functionality to provide. For example, a high or very high frequency bandwidth may be used for the small cell with a small coverage area. Given the problems and costs associated with high frequency, small cell deployments, such small cells are more likely to be utilised as an overlay to existing macro cell deployments. That is to say, the small cells are deployed as required in order to help handle high traffic requirements. In such deployments, it is useful if the user equipment mobility remains associated with the macro cell while the small cell is used for data traffic offloading, when required. In other words, control plane traffic, the network connectivity and mobility associated traffic remains delivered to/from the macro cell, whilst the user plane traffic is delivered (at least in part, to the extent required) to/from the small cell. Figure 1 illustrates such an example arrangement with the control plane and the user plane being split for a particular user equipment. In these arrangements, the small cell may also be referred to as a phantom cell.

The decision to offload certain traffic via a neighbouring phantom cell is typically made by the network, and typically by the serving macro cell base station, mobility management entity or serving gateway. Thereafter, the user equipment receives traffic from both the serving macro cell and the phantom cell. In the downlink, the higher protocol layers of the user equipment assemble the traffic into corresponding bearers. For uplink, the user equipment is required to separate the traffic in such a way that some traffic is delivered to the serving macro cell whilst other traffic (the offloaded traffic) is delivered to the phantom cell.

As mentioned above, in previous arrangements, the user equipment was unable to differentiate uplink traffic based on the intended recipient or transmission path. Even in carrier aggregation or Multiple Input Multiple Output (MIMO) deployments, or in CoMP, which involves the transmission of data over multiple paths, the user equipment assumes that all transmission paths or connections are equivalent in terms of the offered quality of service and, hence, traffic differentiation or transmission path differentiation for uplink traffic was not considered.

However, embodiments recognise that to support traffic offloading to, for example, a phantom cell, traffic differentiation based on the intended transmission path or intended delivery node is needed to support the macro and phantom cell traffic offload architecture. Accordingly, embodiments provide a method for differentiating the traffic such that some traffic with certain characteristics is transmitted to the serving macro base station, whilst offloaded traffic is only transmitted to the phantom base station. If particular, the user equipment splits traffic based on the transmission path such that the traffic is transmitted over different transmission paths with different base stations. The grant (the scheduled resources for transmission) is typically scheduled for a group of transmission flows which contrasts with previous scheduling mechanisms which are based on the user equipment. The user equipment differentiates the traffic which is transmitted over the corresponding granted uplink or downlink resources. The information on how to differentiate the uplink or downlink traffic is provided to the user equipment from a serving base station typically via radio resource control signalling or by other signalling.

Accordingly, embodiments provide an arrangement where an indication is received which indicates the allocation of radio bearers onto different transmission paths which support simultaneous communication between user equipment and a number of different base stations. In accordance with the indication, at least one radio bearer is mapped to be transmitted only using a first transmission path which supports communication between the user equipment and a first base station. That is to say that the at least one radio bearer is transmitted over no other transmission path other than the first transmission path. At least another radio bearer is mapped to a second transmission path which supports communication between the user equipment and a second base station. Accordingly, using this technique, individual radio bearers can be mapped onto individual transmission paths between the user equipment and different base stations. This enables the traffic carried by particular radio bearers to be offloaded only onto specific transmission paths between specific base stations.

### Protocol Layer Architecture

Figure 2 illustrates the protocol layer architecture used for uplink to transmission currently specified in the Long Term Evolution (LTE) standards. It will be appreciated that a similar protocol layer or protocol stack architecture exists for the downlink data transmissions. Data flows are provided by different applications or functional blocks within the user equipment. Each data flow will have associated therewith particular transmission requirements such as, for example, quality of service requirements.

Different radio bearers are provided, each of which has its own characteristics, such as quality of service characteristics.

Data flows are mapped onto the radio bearers based on their requirements such as, for example, quality of service at the packet data convergence protocol (PDCP) layer where Robust Header Compression (ROHC) and security (such as ciphering and integrity protection) is applied.

The radio bearers are then mapped onto logical channels in the radio link control layer. Three logical channels are defined in uplink and they are the Common Control Channel (CCCH), the Dedicated Control Channel (DCCH) and the Dedicated Traffic Channel (DTCH). Data from all uplink logical channels are mapped to the same uplink transport channel, the Uplink Shared Channel (UL-SCH) for uplink transmission over a transmission path between the user equipment and a base station.

According to current LTE standards, the user equipment receives an uplink resource grant to be used for uplink data transmission. The user equipment forms a logical channel prioritisation at the Medium Access Control (MAC) layer whenever a new transmission is performed. Radio resource control signalling controls the scheduling of uplink data by signalling a priority for each logical channel, a prioritised bit rate and a bucket size duration for that logical channel. The prioritised bit rate and bucket size define the maximum data volume that can be accommodated for each logical channel according to a prioritisation rule. Upon reception of the uplink grant, the user equipment schedules data from each logical channel in the priority order.

Multiple uplink grants can be received by the user equipment at a given time when considering carrier aggregation or MIMO transmissions. The user equipment may apply the logical channel prioritisation rules individually per grant, or the rules may be applied for the sum of the grants. Either way, previous arrangements do not differentiate the data flows based on the intended transmission path. However, when performing data offloading via a neighbouring base station, the user equipment will need to differentiate the data flows based on the intended transmission path as mentioned above.

### Signalling Flow

In order to perform the traffic differentiation, the network informs the user equipment which data flows are to be scheduled for traffic offloading. In particular, after the network has decided that there is a need for traffic offloading (in order to, for example, reduce traffic overloading being experienced by a serving macro base station), the user equipment is informed of the decision using RRC signalling from the serving macro base station. It will be appreciated that the network decision for traffic offloading may be made at the base station or at a core network node (such as, for example, the Mobility Management Entity (MME) or a Serving Gateway (S-GW)), depending on the architecture used. It will also be appreciated that a combination of these nodes may make the decision following negotiation and information exchange between these nodes.

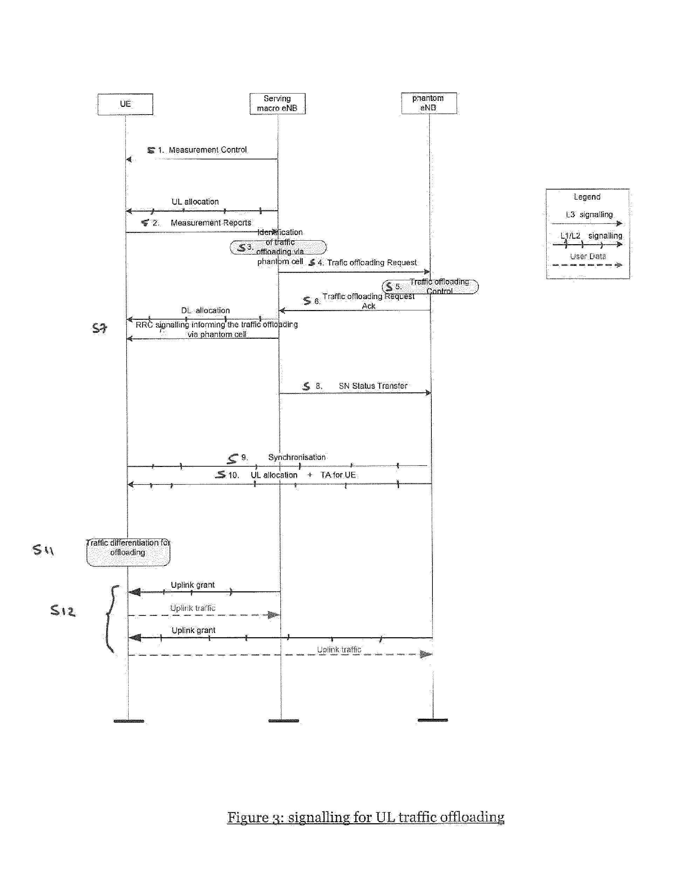

Figure 3 illustrates the network signalling employed between network nodes in the wireless telecommunications network when performing traffic offloading.

At step S1, measurement control is performed and uplink allocation occurs.

At step S2, measurement reports are issued by the user equipment identifying the existence of the phantom base station.

At step S3, the serving base station identifies that traffic offload to the phantom base station can occur.

At step S4, a traffic offload request is made to the phantom base station.

At step S5, the phantom base station considers whether the traffic offload can occur and, if so, at step S6 transmits a traffic offloading request acknowledgement to the serving base station and downlink allocation occurs.

At step S7, RRC signalling occurs which informs the user equipment of the traffic to be offloaded to the phantom base station. In particular, a new parameter may be provided in the radio bearer configuration to indicate whether a radio bearer is selected for offloading. The parameter may take only one bit value to indicate whether or not the radio bearer is selected for offloading. In other embodiments, a radio bearer group can be utilised which effectively groups radio bearers for offloading. It will be appreciated that current standards specify that logical channels can be configured to a logical channel group. Currently, there are up to four logical channel groups defined. Accordingly, in embodiments, the parameter indicates whether a logical channel group is selected or not for offloading.

At step S8, the sequence number status transfer is transmitted from the serving base station to the phantom base station.

At steps S9 and S10, synchronisation and uplink allocation, together with an indication of the timing advance occurs.

As step S11, traffic differentiation occurs.

At step S12, uplink traffic is transmitted using the indicated transmission path either to the serving base station or the phantom base station.

### User Plane Traffic Splitting Structure for Uplink

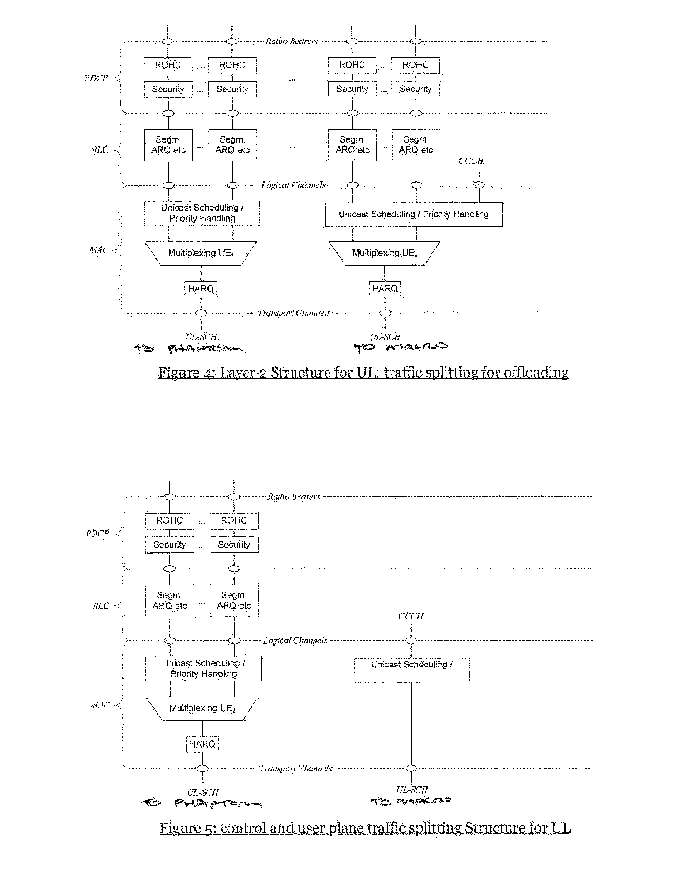

Figure 4 illustrates an arrangement where control plane traffic is delivered to the serving macro base station while some user plane traffic is delivered to the neighbouring phantom base station in response to an indication to perform such traffic offload from the network. In other words, all control plane traffic and some user plane traffic is delivered to the serving macro base station whilst some other user plane traffic is offloaded to the neighbouring phantom base station.

As can be seen, the control plane traffic and some of the user plane traffic are mapped onto the uplink shared channel (UL-SCH) for transmission over the transmission path with the macro base station. Other user plane traffic is offloaded to the neighbouring phantom base station, since this other user plane traffic is mapped onto the UL-SCH for transmission over the transmission path with the neighbouring phantom base station. It will be appreciated that at the scheduling unit, the logical channel prioritisation is applied to the scheduled radio bearers.

### Control and User Plane Traffic Splitting Structure for Uplink

Figure 5 illustrates an arrangement where control plane traffic is delivered to the serving macro base station while all user plane traffic is delivered to the neighbouring phantom base station in response to an indication to perform such traffic offload from the network. As with the above example, an indication is received indicating the mapping of the radio bearers and/or their related logical channels onto different transmission paths.

In this example, all of the user plane traffic is mapped onto the UL-SCH and transmitted over the transmission path between the user equipment and the phantom base station. All of the scheduled control plane traffic is mapped onto the UL-SCH transmitted over the transmission path associated with the serving base station. The UL-SCH are transmitted using the granted resources and delivered to the different base stations.

Although the embodiments mentioned show traffic differentiation occurring at the MAC layer, the traffic differentiation can occur at other layers such as, for example, at the data flow or radio bearer level.

Accordingly, it can be seen that in this arrangement the serving macro base station makes a decision for traffic offloading to the neighbouring phantom cell. After negotiation with the neighbouring phantom base station, the user equipment is informed of the modification to the radio bearer configuration and then transmits the appropriate traffic to the intended base station. Although in this embodiment the macro base station identifies the need to offload traffic, it will be appreciated that this decision could also be made by the phantom base station on identifying the presence of the user equipment and could initiate the negotiation with the serving base station to offload traffic to it. In that example, the serving base station would again signal this to the user equipment using similar RRC signalling to that shown in step S7 of Figure 3.

Accordingly, it can be seen that embodiments provide a solution for traffic differentiation for high volume traffic offloading via a neighbouring small cell. Traffic is differentiated at the data flow, radio bearer or logical channel group level for offloading. The selected traffic for offloading is scheduled separately from other traffic. In particular, embodiments support the control and user plane traffic delivery via different transmission paths which may prove to be particularly beneficial.

Current techniques provide user equipment with multiple transmission resource grants is known, but it is up to the user equipment implementation to decide how to map data to the multiple grants, and the quality of service provided by each grant is assumed to be the same, so in general the data split between grants cannot be according to data characteristics. Accordingly, one aspect provides a method for transmitting a plurality of data streams from a user equipment via at least two granted transmission resources (with the intention being that each granted transmission resource is for reception at a different network node), **characterised in that** the network transmits to the user equipment an indicator of which data streams are to be mapped to each of the at least two granted transmission resources, and the user equipment maps data streams to the at least two granted transmission resources in accordance with the indicator. Preferably, the indication is for control plane data streams to be mapped to one granted transmission resource and user plane data streams to be mapped to another granted transmission resource, but in other embodiments some user plane data could also be included with the control plane data.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implemented as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications method, comprising:
receiving an indication of radio bearer allocation onto different transmission paths supporting simultaneous communication between user equipment and different base stations; and
mapping, in accordance with said indication, at least one radio bearer for transmission using only a first transmission path supporting communication between said user equipment and a first base station and at least one other radio bearer for transmission using only a second transmission path supporting communication between said user equipment and a second base station.

2. The method of claim 1, wherein said first transmission path is supported by a first protocol stack and said second transmission path is supported by a second protocol stack and said step of mapping comprises mapping said at least one radio bearer to said first protocol stack and said at least one other radio bearer to said second protocol stack.

3. The method of claim 1 or 2, wherein said indication indicates allocation of a plurality of logical channels derived from a plurality of said radio bearers, said first transmission path is coordinated by a first scheduler and said second transmission path is coordinated by a second scheduler and said step of mapping comprises mapping at least one logical channel derived from said at least one radio bearer to said first scheduler and at least one other logical channel derived from said at least one other radio bearer to said second scheduler.

4. The method of any preceding claim, wherein said first transmission path and said transmission path comprise one of an uplink traffic channel and a downlink traffic channel.

5. The method of any preceding claim, wherein said first transmission path and said second transmission path comprise an uplink traffic channel and said first scheduler and said second scheduler are provided by said user equipment.

6. The method of any preceding claim, wherein said first transmission path and said second transmission path comprise a downlink traffic channel and said first scheduler and said second scheduler are provided by said first base station and said second base station respectively.

7. The method of any preceding claim, wherein upper layers of said first protocol stack and said second protocol stack are shared by both said first protocol stack and said second protocol stack.

8. The method of any preceding claim, wherein said user equipment is served primarily by said first base station, said indication indicates allocation of a plurality of radio bearers from said first transmission path to said second transmission path and said step of mapping comprises mapping said plurality of radio bearers to said second transmission path.

9. The method of any preceding claim, wherein said indication indicates allocation of a plurality of logical channels derived from a plurality of said radio bearers from said first transmission path to said second transmission path and said step of mapping comprises mapping said plurality of logical channels to said second transmission path.

10. The method of any preceding claim, wherein said indication indicates allocation of at least one logical channel group to said second transmission path.

11. The method of any preceding claim, wherein said first base station comprises a macro base station and said second base station comprises a small cell base station.

12. The method of any preceding claim, wherein said radio bearers comprise data radio bearers and signalling radio bearers and said at least one radio bearer comprises only data radio bearers.

13. The method of any preceding claim, comprising the step of communicating said indication of radio bearer allocation between said first base station and said second base station.

14. A computer program product operable, when executed on a computer, to perform the method steps of any preceding claim.

15. A network node, comprising:
reception logic operable to receive an indication of radio bearer allocation onto different transmission paths supporting simultaneous communication between user equipment and different base stations; and
mapping logic operable to map, in accordance with said indication, at least one radio bearer for transmission using only a first transmission path supporting communication between said user equipment and a first base station and at least one other radio bearer for transmission using only a second transmission path supporting communication between said user equipment and a second base station.
